# EUROPEAN PATENT SPECIFICATION

(11) **EP 0 213 734 B1**
(45) Date of publication and mention of the grant of the patent: **02.02.1994**
(21) Application number: 86305773.3
(22) Date of filing: 28.07.1986
(51) Int. Cl.: C08L 1/00, C12N 5/00, A61K 31/715, C08L 1/28

(54) **Viscoelastic solution**
Viskoelastische Lösung
Solution visco-élastique

(30) Priority: 01.08.1985 US 761406
(43) Date of publication of application: 11.03.1987
(73) Proprietor: LINDSTROM, Richard L., Wayzata, MN 55391 (US); SKELNIK, Debra L., Cambridge, MN 55008 (US)
(72) Inventor: LINDSTROM, Richard L., Wayzata, MN 55391 (US); SKELNIK, Debra L., Cambridge, MN 55008 (US)
(74) Representative: Parr, Ronald Edward R.E. Parr & Co.

(56) References cited:
- DE-B- 2 805 907
- US-A- 4 302 577
- US-A- 4 486 416
- Windholz, M. (Ed.) The Merck Index, Tenth Edition, (1983), Merck & Co. Inc. Rahway, N.J. USA, Page 706

## Description

The present invention pertains to a viscoelastic solution which is used to protect cells from mechanical trauma, to maintain or create tissue spaces, to ensure separation and lubrication of tissue surfaces, to permit the manipulation of tissues without mechanical damage, and to prevent and control movement and activities of certain cells.

There have been numerous prior art solutions such as a non-inflammatory, high molecular weight fraction of sodium hyaluronate sold under the trade mark Healon.

The present invention provides a viscoelastic solution which includes good coating properties and natural occurring bicompatible polymer.

The general purpose of the present invention is a viscoelastic solution which provides a buffered pH neutral solution as a base, and includes the attributes of the combination of chondroitin sulfate and hydroxy-propyl methyl cellulose.

The invention provides a viscoelastic solution comprising:
(a) a buffered solution;
(b) hydroxy-propyl methyl cellulose; and
(c) chondroitin sulfate; whereby the viscoelastic solution is buffer pH- adjusted.

In a preferred form of the invention the viscoelastic solution has an osmolality in the range 200 to 400 m.Os.mol/kg and a pH of 7.2 - 7.6.

In another preferred form of the invention the viscoelastic solution comprises:
(a) buffered balanced salt solution;
(b) 1-8% hydroxy-propyl methyl cellulose; and
(c) 1-8% chondroitin sulfate pH- adjusted to 7.2-7.6 at osmolality between 200 - 400 m.Os.mol/kg.

The chondroitin sulfate can be used, for example, in an amount of 2 - 4%. An example of a viscoelastic solution containing such an amount of chondroitin sulfate is one comprising:
(a) a solution from a group of: a buffered balanced salt solution, a minimum essential medium buffered with N-2-hydroxyethylpiperazine-N'-ethane sulphonic acid, phosphate-buffered system and GIBCO TC 199;
(b) 1-8% of hydroxy-propyl methyl cellulose; and
(c) 2-4% of chondroitin sulfate; the pH of the viscoelastic solution being in the range from 7.2 to 7.6 at osmolality between 200-400 m.Os.mol/kg.

One significant aspect and feature of the present invention is a viscoelastic solution which provides better viscosity including the viscosity properties of the hydroxypropyl methyl cellulose and the lubricating property of the chondroitin sulfate.

Another significant aspect and feature of the present invention is providing a buffered pH neutral solution as a base for the viscoelastic solution.

A further significant aspect and feature of the present invention is a viscoelastic solution which provides cell protection and cell coating. The solution provides maintenance of the tissue space, the chondroitin sulfate lubricates the tissue while the hydroxy-propyl methyl cellulose provides tissue manipulation.

There is now described, by way of example, a viscoelastic solution of the invention.

The viscoelastic solution includes a buffered solution, 1-8% hydroxy-propyl methyl cellulose and 1-8% chondroitin sulfate, pH-adjusted to 7.2 - 7.6% at osmolality between 200-400 m.Os.mol/kg. The buffered solution can be selected from a minimum essential medium buffered with N-2-hydroxyethylpiperazine-N'-ethane sulphonic acid, (HEPES), phosphate buffer system (PBS), balanced salt solution, or the tissue culture medium manufactured by Gibco under the Trade Mark TC 199. Preferably, the hydroxy-propyl methyl cellulose can be at 4 percent while the chondroitin sulfate can be at 2-4 percent volume.

## Claims

1. A viscoelastic solution comprising:
(a) a buffered solution;
(b) hydroxy-propyl methyl cellulose; and
(c) chondroitin sulfate; whereby the viscoelastic solution is buffer pH-adjusted.

2. A viscoelastic solution according to Claim 1, which has an osmolality in the range 200 to 400m.Os.mol/kg. and a pH of 7.2 - 7.6.

3. A viscoelastic solution according to Claim 1, comprising:
(a) buffered balanced salt solution;
(b) 1-8% hydroxy-propyl methyl cellulose; and
(c) 1-8% chondroitin sulfate pH-adjusted to 7.2 - 7.6 at osmolality between 200 - 400 m.Os.mol/kg.

4. A viscoelastic solution, according to any of the preceding claims, in which the chondroitin sulfate is present in an amount of 2 - 4%.

5. A viscoelastic solution according to Claim 1, comprising:
(a) a solution from a group of: a buffered balanced salt solution, a minimum essential medium buffered with N-2-hydroxyethylpiperazine-N'-ethane sulphonic acid and phosphate-buffered system;
(b) 1-8% of hydroxy-propyl methyl cellulose; and
(c) 2-4% of chondroitin sulfate; the pH of the viscoelastic solution being in the range from 7.2 to 7.6 at osmolality between 200 -400 m.Os.mol/kg.

## Patentansprüche

1. Viskoelastische Lösung enthaltend:
(a) eine gepufferte Lösung;
(b) Hydroxy-Propyl-Methyl-Zellulose; und
(c) Chondroitinsulfat;
wodurch die viskoelastische Lösung pH-eingestellt gepuffert ist.

2. Viskoelastische Lösung nach Anspruch 1, welche eine Osmolalität im Bereich von 200 bis 400 m.Os.mol/kg. und einen pH-Wert von 7,2 - 7,6 hat.

3. Viskoelastische Lösung nach Anspruch 1, enthalted:
(a) gepufferte abgeglichene Salzlösung;
(b) 1-8% Hydroxy-Propyl-Methyl-Zellulose; und
(c) 1-8% Chondroitinsulfat, pH-eingestellt auf 7,2 - 7,6 bei einer Osmolalität zwischen 200 - 400 m.Os.mol/kg.

4. Viskoelastische Lösung nach einem der vorhergehenden Ansprüche, bei welcher das Chondroitinsulfat in einer Menge von 2-4% anwesend ist.

5. Viskoelastische Lösung nach Anspruch 1, enthaltend:
(a) eine Lösung aus einer Gruppe von: einer gepufferten abgeglichenen Salzlösung, einem Mindestessentialmedium, gepuffert mit N-2-Hydroxyethylpiperazin-N'-Ethan-Sulfonsäure und phosphatgepuffertem System;
(b) 1-8% an Hydroxy-Propyl-Methyl-Zellulose; und
(c) 2-4% and Chondroitinsulfat; wobei der pH-Wert der viskoelastische Lösung in dem Bereich von 7,2 - 7,6 bei Osmolalität zwischen 200-400 m.Os.mol/kg. liegt.

## Revendications

1. Solution viscoélastique comprenant :
(a) une solution tamponnée ;
(b) de l'hydroxy-propyl méthyl cellulose ; et
(c) du sulfate de chondroïtine ;
la solution viscoélastique étant ajustée au pH du tampon.

2. Solution viscoélastique selon la revendication 1, qui a une osmolalité se situant dans la plage allant de 200 à 400 m.Os.mol/kg, et un pH de 7,2 - 7,6.

3. Solution viscoélastique selon la revendication 1, comprenant :
(a) une solution saline, équilibrée, tamponnée ;
(b) 1 - 8% d'hydroxy-propyl méthyl cellulose ; et
(c) 1 - 8% de sulfate de chondroïtine
ajustée à pH 7,2 - 7,6, à une osmolalité comprise entre 200 et 400 m.Os.mol/kg.

4. Solution viscoélastique selon l'une des revendications précédentes, dans laquelle le sulfate de chondroïtine est présent dans une quantité de 2 - 4%.

5. Solution viscoélastique selon la revendication 1, comprenant :
(a) une solution provenant d'un groupe constitué par : une solution saline, équilibrée, tamponnée, un milieu essentiel minimal tamponné par l'acide N-2-hydroxyéthylpipérazine-N'-éthane sulfonique et un système tampon de phosphate ;
(b) 1 - 8% d'hydroxy-propyl méthyl cellulose ; et
(c) 2 - 4% de sulfate de chondroïtine ;
le pH de la solution viscoélastique se situant dans la plage allant de 7,2 à 7,6, à une osmolalité comprise entre 200 et 400 m.Os.mol/kg.
